# EUROPÄISCHE PATENTSCHRIFT

(11) **EP 2 771 642 B1**
(45) Veröffentlichungstag und Bekanntmachung des Hinweises auf die Patenterteilung: **15.04.2020**
(21) Anmeldenummer: 12787387.5
(22) Anmeldetag: 22.10.2012
(51) Int. Cl.: G01B 11/00, H05H 7/00

(54) **LAGEÜBERWACHUNGSVORRICHTUNG**
POSITION-MONITORING DEVICE
DISPOSITIF DE SURVEILLANCE DE POSITION

(30) Priorität: 24.10.2011 DE 102011054746
(43) Veröffentlichungstag der Anmeldung: 03.09.2014
(73) Patentinhaber: GSI Helmholtzzentrum für Schwerionenforschung GmbH, 64291 Darmstadt (DE)
(72) Erfinder: MICKAT, Sascha, 64739 Höchst (DE); KAISER, Michael, 64291 Darmstadt (DE); BARTH, Winfried, 60529 Frankfurt (DE)
(86) Internationale Anmeldenummer: PCT/EP2012/070883
(87) Internationale Veröffentlichungsnummer: WO 2013/060650

(56) Entgegenhaltungen:
- SUWADA T ET AL: "Experimental study of new laser-based alignment system at the KEK B-factory injector linear accelerator", REVIEW OF SCIENTIFIC INSTRUMENTS, AIP, MELVILLE, NY, US, Bd. 81, Nr. 12, 10. Dezember 2010 (2010-12-10), Seiten 123301-123301, XP012145863, ISSN: 0034-6748, DOI: 10.1063/1.3504370
- J. Aguilar ET AL: "Laser Alignment System for LumiCal", Eudet Memo 2010-08, 1. Januar 2010 (2010-01-01), XP055048932, Gefunden im Internet: URL:http://www.eudet.org/e26/e28/e86887/ [gefunden am 2013-01-09]
- Naoko Iida ET AL: "A METHOD FOR MEASURING VIBRATIONS IN WIRE SCANNER BEAM PROFILE MONITORS", Conf.Proc. C9803233, 1. Januar 1998 (1998-01-01), XP55048861, Gefunden im Internet: URL:http://accelconf.web.cern.ch/Accelconf /a98/APAC98/5D061.PDF [gefunden am 2013-01-08]
- MATSUSHITA T ET AL: "Optical alignment system for the ZEUS micro vertex detector", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, Bd. 466, Nr. 2, 1. Juli 2001 (2001-07-01), Seiten 383-389, XP004251257, ISSN: 0168-9002, DOI: 10.1016/S0168-9002(01)00593-9

## Beschreibung

Die Erfindung betrifft eine Positionsüberwachungsvorrichtung zur Überwachung der Position von zumindest einer zu überwachenden Vorrichtung, die in zumindest einer Gehäuseeinrichtung angeordnet ist, die ein Teil eines Teilchenbeschleunigers ist. Weiterhin betrifft die Erfindung eine Teilchenbeschleunigersegmenteinrichtung und/oder einen Teilchenbeschleuniger.

Bei technischen Geräten ist es oftmals erforderlich, dass die Position (Justage) von bestimmten Komponenten überprüft werden muss. Denn eine korrekte Positionierung von bestimmten Komponenten kann für die Funktionalität beziehungsweise Betriebsfähigkeit einer Anlage entscheidend sein.

Eine Überprüfung der Position einer Vorrichtung ist dabei oftmals nicht nur initial bei der Montage der Vorrichtung durchzuführen, sondern häufig auch in bestimmten Abständen beim Betrieb der Vorrichtung. Bei diesen Abständen kann es sich einerseits um feste zeitliche Intervalle handeln, andererseits aber auch um eine Positionsüberprüfung der Vorrichtung, wenn die Anlage beziehungsweise Teile der Anlage eine signifikante Änderung durchlaufen haben. Bei einer derartigen signifikanten Änderung kann es sich beispielsweise um eine zwischenzeitlich erfolgte mechanische Belastung der Anlage handeln. Eine derartige mechanische Belastung kann nicht nur durch äußere Einflüsse erfolgen, sondern auch beispielsweise durch Evakuierung oder umgedreht durch Druckbeaufschlagung von Teilen der Anlage. Eine weitere Belastung kann sich ergeben, wenn Teile der Anlage stark abgekühlt beziehungsweise stark erhitzt werden.

Anlagen, bei denen Teile der Anlage stark abgekühlt sowie evakuiert (Beaufschlagung mit einem Vakuum) werden müssen, damit diese betriebsfähig werden, finden sich beispielsweise - aber nicht ausschließlich - im Forschungsumfeld. Gerade bei solchen Anlagen kommt erschwerend hinzu, dass diese im montierten Zustand von außen nicht beziehungsweise nur äußerst problematisch zugänglich sind. Dieses Problem kann jedoch auch andere technische Anlagen betreffen.

Rein beispielhaft können in diesem Zusammenhang physikalische Experimente, wie insbesondere Experimente der Festkörperphysik oder der Aufbau von sowie Experimente mit Teilchenstrahlbeschleunigern genannt werden. Diese müssen einerseits in geschlossenen, vakuumdichten und möglichst gut isolierenden Gehäusen stattfinden. Dies impliziert jedoch, dass diese gut verschlossen werden müssen und das Innere von außen praktisch nicht zugänglich ist. Dabei tritt das zusätzliche Problem auf, dass die Komponenten bei Zimmertemperatur und unter Atmosphärenbedingungen aufgebaut und verschlossen werden, anschließend das Innere der Anlage evakuiert wird und Teile der Anlage (beispielsweise Messanordnungen) stark abgekühlt werden (beispielsweise unter Verwendung von flüssigem Stickstoff oder flüssigem Helium). Gerade durch die sich ändernden mechanischen Belastungen, durch die dabei entstehenden Druckunterschiede sowie durch thermischen Verzug (thermische Ausdehnung und thermische Kontraktion) können sich jedoch Positionierungsfehler ergeben, die durchaus signifikante Größen annehmen können und bis zum Versagen der Anlage führen können.

Ein übliches Vorgehen im Stand der Technik besteht darin, dass die sich durch die Zustandsänderungen der Anlage ergebenden mechanischen Veränderungen durch Rechenmodelle abgeschätzt werden und die sich ergebenden Positionierungsfehler vorab bei der Montage unter Atmosphärenbedingungen bei Zimmertemperatur berücksichtigt werden. Hier besteht jedoch das Problem, dass die theoretischen Vorhersagen oftmals nicht ausreichend genau sind und darüber hinaus unerwartete Effekte auftreten können, die vorab nicht berücksichtigt wurden.

Eine Vorrichtung zur Überprüfung des Lageversatzes bei Hochenergie-Teilchenbeschleunigern wurde in der wissenschaftlichen Veröffentlichung "Displacement measurements in the Cryogenically Cooled Dipoles of the new CERN-LHC Particle Accelerator" von D. Inaudi, B. Glisic, W. Scandale, J.-G. Perez, J. Billan und S. Radaelli in SPIE, International Symposium on Smart Structures and Materials, 4-8.3.2001 in Newport Beach, USA, vorgestellt. Hierbei werden sich ergebende Lageunterschiede durch interferometrische Verfahren gemessen. Ein Problem dabei ist, dass interferometrische Verfahren vergleichsweise aufwändig und entsprechend teuer sind. Darüber hinaus sind oftmals vergleichsweise große Bauteile in den Anlagen zusätzlich unterzubringen, was entsprechende Nachteile nach sich ziehen kann. Darüber hinaus können bei interferometrischen Anlagen oftmals nur relative Lageänderungen erfasst werden (bzw. sind zur Durchführung von "Absolutmessungen" in der Regel weitere, meist aufwändige, zusätzliche Komponenten erforderlich). Eine direkte "Absolutmessung" ist jedoch oftmals nicht möglich. Zwar ist anzuerkennen, dass interferometrische Verfahren eine sehr hohe Messgenauigkeit aufweisen (Bereich von etwa 100 Nanometern), eine derart hohe Messgenauigkeit ist jedoch für viele Aufbauten, insbesondere im Teilchenbeschleunigerbereich, nicht erforderlich. Hier reichen üblicherweise Messgenauigkeiten im Bereich von 0,1 mm (also etwa ein Faktor 1000 schlechter) aus. Dies hängt damit zusammen, dass der Teilchenstrahl eine endliche Ausdehnung von typischerweise einigen wenigen Millimetern aufweist.

Die Veröffentlichung "Experimental study on new laser-based alignment system at the KEK B-factory injector linear accelerator" (Suwada et al., Review of Scientific Instruments, 81 (2010) 123301) offenbart ein Laser-basiertes System zur Ausrichtung von Komponenten eines Linearbeschleunigers, bei dem ein Laserstrahl auf eine an Trägern des Beschleunigers befestigte Quadrantendiode trifft und Verschiebungen der Beschleunigerkomponenten senkrecht zum Laserstrahl gemessen werden.

Das Dokument "Laser Alignment System for LumiCal" (Aguilar et al., Eudet Memo 2010-08) offenbart ein Laser-basiertes System zur Messung von Verschiebungen des LumiCal Detectors, wobei Laserstrahlen auf positionsempfindliche Detektoren treffen, die an den LumiCal-Ringen angeordnet sind
In der Veröffentlichung "A Method for Measuring Vibrations in Wire Scanner Beam Profile Monitors" (lida et al. (1998), verfügbar unter http://accelconf.web.cern.ch/Accelconf/a98/APAC98/5D061.PDF) ist eine Vorrichtung zur Bestimmung der Position eines Drahtes in einem Teilchenbeschleuniger beschrieben, die eine Lichtquelle und eine positionsempfindlichen Fotodiode (PSD) umfasst, die das von einer metallischen Markierung reflektierte Licht misst.

Die Veröffentlichung "Optical Alignment System for ZEUS micro vertex detector" (Matsushita et al., Nuclear Instruments and Methods in Physics Research A 466 (2001) 303-389) offenbart ein System zur Messung des Lageversatzes des Micro Vertex Detektors für das ZEUS Experiment, wobei Laserstrahlen auf spezielle, semi-transparente Sensoren aus amorphem Silizium treffen, die an der Trägerstruktur des Micro Vertex Detektors befestigt sind.

Die Aufgabe der Erfindung besteht darin, eine gegenüber dem Stand der Technik verbesserte Positionsüberwachungsvorrichtung vorzuschlagen.

Die Erfindung löst diese Aufgabe.

Eine Teilchenbeschleunigersegmenteinrichtung (2) gemäß Anspruch 1 sowie ein Verfahren zur Bestimmung der Position einer zu überwachenden Vorrichtung gemäß Anspruch 15 wird vorgeschlagen. Bei der zu überwachenden Vorrichtung kann es sich grundsätzlich um eine im Wesentlichen beliebige Art von Vorrichtung handeln. Insbesondere kann es sich bei der zu überwachenden Vorrichtung um (Teile) eine(r) Messvorrichtung (die insbesondere eine andere Messaufgabe als die Messung eines Positionsversatzes hat) handeln, um eine Haltevorrichtung für ein zu bearbeitendes Gut (beispielsweise ein Target in einer Teilchenstrahlbeschleunigervorrichtung), um eine sonstige Sensorvorrichtung (beispielsweise Druck- oder Temperaturmessvorrichtung), um eine Aktuatorvorrichtung und dergleichen. Möglich ist es auch, dass es sich bei der zu überwachenden Vorrichtung um Teile der Gehäuseeinrichtung selbst handelt beziehungsweise um unmittelbar mit der Gehäuseeinrichtung verbundene Einrichtungen, um beispielsweise eine Verbiegung oder dergleichen der Gehäuseeinrichtung zu überwachen. Bei der strahlartigen Lichtquellenvorrichtung kann es sich um eine grundsätzlich beliebige Lichtquelle mit einer grundsätzlich beliebigen Wellenlänge handeln. Die strahlartige Lichtquellenvorrichtung sollte jedoch einen vorzugsweise vergleichsweise eng gebündelten Lichtstrahl aussenden und/oder der Lichtstrahl sollte einen besonders scharfen Hell-Dunkel-Übergang am Rand aufweisen und/oder das emittierte Licht sollte eine für eine Positionsüberwachung geeignete Wellenlänge aufweisen. Bei der Lichtstrahlpositionserkennungsvorrichtung kann es sich ebenfalls um eine im Wesentlichen beliebige Vorrichtung handeln. Insbesondere soll es diese ermöglichen, die Lage und/oder zumindest den relativen Versatz des Lichtstrahls in zumindest einer Richtung, vorzugsweise in zumindest zwei Richtungen zu messen, die bevorzugt in einer Ebene liegen, welche besonders bevorzugt senkrecht zum Lichtstrahl steht. Mit anderen Worten sollte mit der Lichtstrahlpositionserkennungsvorrichtung zumindest eine x-Position beziehungsweise ein x-Versatz und/oder eine y-Position beziehungsweise ein y-Versatz zu messen sein (wobei gegebenenfalls auch eine Umrechnung, wie beispielsweise eine Koordinatentransformation, erforderlich sein kann). Die x-Richtung kann dabei im Wesentlichen beliebig sein. Vorzugsweise sollte der Winkel der x-Richtung gemessen werden können. Für y-Messungen gilt das gleiche in Analogie. Hierbei ist darauf hinzuweisen, dass die x- und die y-Richtung nicht notwendigerweise senkrecht aufeinander stehen müssen. Selbstverständlich können sowohl x- und/oder y-Richtung auch einen gewissen Winkel zur Strahlrichtung aufweisen. Durch eine Kombinationsmessung einer x- und einer y-Position und/oder eines x- und eines y-Versatzes kann eine entsprechende Messung in einer x-y-Ebene resultieren. Denkbar ist es darüber hinaus auch eine (gegebenenfalls eingeschränkte) dreidimensionale Messung durchzuführen, bei der insbesondere Kippbewegungen und Drehbewegungen der zu überwachenden Vorrichtung(en) überwacht werden. Grundsätzlich ist aber auch eine "echt dreidimensionale" Messung denkbar, bei der beispielsweise (zusätzlich) die Lage bzw. die Lageveränderung in Richtung des Lichtstrahls gemessen wird (also in der Regel in z-Richtung).

Weiterhin wird vorgeschlagen, dass bei der Positionsüberwachungsvorrichtung die zumindest eine strahlartige Lichtquellenvorrichtung als kohärente Lichtquellenvorrichtung, insbesondere als hochkohärente Lichtquellenvorrichtung, bevorzugt als Laservorrichtung ausgebildet ist und/oder dass bei der Positionsüberwachungsvorrichtung der Lichtstrahl der strahlartigen Lichtquellenvorrichtung im Wesentlichen parallel und/oder unter einem definierten Winkel zur Längsachse der zumindest einen Gehäuseeinrichtung verläuft. Bei kohärenten Lichtquellen kann es sich beispielsweise um Quecksilberdampflampen bzw. Hochdruck-Quecksilberdampflampen handeln. Typischerweise weisen kohärente Lichtquellen Kohärenzlängen im ZentimeterBereich bzw. im Dezimeter-Bereich auf (typischerweise bis zu maximal etwa einem halben Meter). Entsprechend können unter hochkohärenten Lichtquellenvorrichtungen insbesondere Lichtquellenvorrichtungen verstanden werden, welche eine Kohärenzlänge im Meterbereich und darüber aufweisen, insbesondere eine Kohärenzlänge von ≥1 m aufweisen. Erste Experimente haben ergeben, dass sich kohärente Lichtquellenvorrichtungen, insbesondere Laserstrahlen, besonders gut zur Positionsbestimmung mit der vorgeschlagenen Positionsüberwachungsvorrichtung eignen. Insbesondere Laservorrichtungen weisen darüber hinaus einen dünnen, feinen Strahl auf, der einen sehr scharfen Kontrast am Rand aufweist. Weiterhin ist bei Laservorrichtungen in aller Regel die Lichtintensität sehr hoch, so dass insbesondere auch Streustrahlungsmessungen (auch bei wenigen Streuzentren) vorteilhaft möglich sind. Als Laservorrichtung können grundsätzlich beliebige Arten von Lasern verwendet werden, insbesondere auch Gaslaser, Festkörperlaser, Halbleiterlaser (Laserdioden) und dergleichen. Insbesondere dann, wenn der Lichtstrahl der strahlartigen Lichtquellenvorrichtung im Wesentlichen parallel zur Längsachse der zumindest einen Gehäuseeinrichtung verläuft, kann dieser von einer besonders großen Anzahl an Lichtstrahlpositionserkennungsvorrichtungen beziehungsweise Positionsüberwachungsvorrichtungen genutzt werden. Somit ist es insbesondere möglich, den Gesamtaufbau zur Vermessung der Position einer gegebenenfalls großen Anzahl von zu überwachenden Vorrichtungen zu vereinfachen. Insbesondere dann, wenn der Lichtstrahl der strahlartigen Lichtquellenvorrichtung in einem definierten Winkel zur Längsachse der zumindest einen Gehäuseeinrichtung verläuft, sind auch insbesondere direkt bestrahlte Lichtpositionserkennungsvorrichtungen denkbar.

Die Positionsüberwachungsvorrichtung weist zumindest eine Gehäuseeinrichtung auf, welche als Vakuumeinrichtung, bevorzugt als Hochvakuumeinrichtung ausgebildet ist. In ersten Versuchen hat es sich als vorteilhaft erwiesen, wenn die zumindest eine Gehäuseeinrichtung zumindest bereichsweise als kryostatische Einrichtung ausgebildet ist und/oder zumindest teilweise zur Aufnahme kryostatischer Komponenten dient. Gerade bei derartigen Gehäusevorrichtungen ist es in der Regel besonders schwierig, eine Positionsüberwachungsvorrichtung zu nutzen, insbesondere eine Positionsüberwachungsvorrichtung nach dem Stand der Technik. Es handelt sich dabei um eine Teilchenbeschleunigersegmenteinrichtung oder auch um (Teile einer) Teilchenbeschleunigereinrichtung. Hierbei ist nicht nur an die (Haupt-)Bereiche eines Teilchenbeschleunigers zu denken, sondern auch an "Hilfskomponenten" wie beispielsweise Verbindungsstrecken, Kicker-Magneten, lonenquellen und dergleichen. Unter derartigen Bedingungen zu betreibende Vorrichtungen sind jedoch insbesondere im Forschungsumfeld überaus verbreitet, sodass die Positionsüberwachungsvorrichtung gerade in diesem Bereich besonders große Vorteile mit sich bringt.

Eine weitere vorteilhafte Weiterbildung der Positionsüberwachungsvorrichtung kann sich ergeben, wenn die zumindest eine Gehäuseeinrichtung zumindest bereichsweise als rohrartige Gehäuseeinrichtung ausgebildet ist und/oder zumindest eine Biegung und/oder zumindest eine verbindungsflanschartige Öffnung, zumindest eine Fenstervorrichtung und/oder zumindest eine Glasfaserdurchführungsvorrichtung aufweist. Bei einer rohrartigen Gehäuseeinrichtung kann es sich insbesondere um die Beamline eines Teilchenstrahlbeschleunigers beziehungsweise Abschnitte eines linearen oder kreisförmigen Teilchenbeschleunigers handeln. An diese können darüber hinaus noch diverse Sensoren, Messvorrichtungen oder Aktuatoren und sonstige Vorrichtungen befestigt werden. Unter einer Fenstervorrichtung kann insbesondere eine vakuumdichte Glasscheibe (mit insbesondere entsprechend der Lichtquelle optimierten Transmissionseigenschaften) verstanden werden, die auf einen bei derartigen Vakuumrohren typischerweise vorhandenen Flansch aufgeschraubt wird. Auch eine Glasfaserdurchführungsvorrichtung kann sich als vorteilhaft erweisen, da auf diese Weise insbesondere ein Laserstrahl besonders gut in die (rohrartige) Gehäuseeinrichtung eingekoppelt werden kann. Gerade rohrartige Gehäuseeinrichtungen, die üblicherweise eine vergleichsweise große Länge aufweisen, sind mit üblichen Positionsüberwachungsvorrichtungen nicht oder nur überaus schwer zu überwachen. Insofern kann die vorgeschlagene Positionsüberwachungsvorrichtung in einem derartigen Umfeld ihre Vorzüge in besonderem Maße ausspielen. Dies gilt insbesondere dann, wenn die (rohrartige) Gehäuseeinrichtung, bzw. deren Inneres, nicht oder nur eingeschränkt von außen sichtbar ist.

Möglich ist es, dass bei der Positionsüberwachungsvorrichtung die zumindest eine Lichtstrahlpositionserkennungsvorrichtung als direkt bestrahlte Lichtstrahlerkennungsvorrichtung, insbesondere als direkt bestrahlte Lichtstrahlpositionserkennungsvorrichtung ausgebildet ist. Unter einer direkt bestrahlten Lichtstrahlerkennungsvorrichtung ist insbesondere eine Vorrichtung zu verstehen, deren Messprinzip darauf beruht, dass diese unmittelbar von Licht getroffen wird, also insbesondere unmittelbar vom Licht der zumindest einen strahlartigen Lichtquellenvorrichtung (wobei es in der Regel unschädlich ist, wenn dieses beispielsweise durch Spiegel abgelenkt wurde, durch eine Glasfaser gelenkt wurde und dergleichen). Dementsprechend ist unter einer direkt bestrahlten Lichtstrahlpositionserkennungsvorrichtung in der Regel eine Vorrichtung zu verstehen, deren Messprinzip darauf beruht, dass die Vorrichtung unmittelbar von Licht getroffen wird und daraus die Position des Lichtstrahls ermittelt wird. Als Beispiele sind in diesem Zusammenhang Fototransistoren, Fotodioden, Fotodiodenzeilen, CCD-Chips und dergleichen zu verstehen. Insbesondere die genannten Beispiele (aber gegebenenfalls auch ganz allgemein) müssen dabei nicht auf den sichtbaren Bereich des Spektrums beschränkt sein. Eine derartige Ausbildung kann besonders einfach sein und dennoch vergleichsweise genaue Messwerte liefern.

Bei der Positionsüberwachungsvorrichtung ist zumindest eine Lichtstrahlpositionserkennungsvorrichtung als Streulichterkennungsvorrichtung, insbesondere als Streulichterkennungsvorrichtungspaar, bevorzugt als Streulichtpositionserkennungsvorrichtung, insbesondere als Streulichtpositionserkennungsvorrichtungspaar und/oder als Streulichtintensitätserkennungsvorrichtung, insbesondere als Streulichtintensitätserkennungsvorrichtungspaar ausgebildet. Unter einer Streulichterkennungsvorrichtung ist insbesondere eine Vorrichtung zu verstehen, deren Messprinzip darauf beruht, dass Streulicht, insbesondere Streulicht der zumindest einen strahlartigen Lichtquellenvorrichtung, zur Messung verwendet wird. Eine Streuung kann beispielsweise an in der Gehäusevorrichtung verbliebenen Restpartikeln (Schwebstoffe, Staub, Gasteilchen, Nebeltröpfchen und dergleichen) erfolgen. Unter "Restpartikeln" bzw. "Schwebstoffen" sind insbesondere Teilchen zu verstehen, die sich zumindest eine gewisse Zeit lang und insbesondere ohne mechanische Verbindung zu anderen Gegenständen in einer Art Schwebezustand befinden können. Insbesondere bei der Vermessung von Streulicht ist es vorteilhaft, wenn die Messvorrichtung als Paar zweier Sensoren (gegebenenfalls auch mehrere Sensoren) ausgebildet ist, also als Streulichterkennungsvorrichtungspaar. Insbesondere ist es möglich, dass die Streulichterkennungsvorrichtung derart ausgebildet ist, dass diese aus dem gemessenen Streulicht auf die Position des Lichtstrahls der zumindest einen strahlartigen Lichtquellenvorrichtung schließen kann, also als Streulichtpositionserkennungsvorrichtung beziehungsweise Streulichtpositionserkennungsvorrichtungspaar (mehrere Sensoren) ausgebildet ist. Eine derartige Erkennung kann insbesondere dadurch erfolgen, dass die Intensität des Streulichts gemessen wird (insbesondere mittels eines Lichtintensitätsvergleichs), die Lichtstrahlpositionserkennungsvorrichtung also als Streulichtintensitätserkennungsvorrichtung beziehungsweise Streulichtintensitätserkennungsvorrichtungspaar ausgebildet ist. Die Messung der Intensität des Streulichts kann jedoch auch zu anderen Zwecken erfolgen, wie beispielsweise zur Ermittlung einer Restgasverunreinigung in der geschlossenen Gehäusevorrichtung oder dergleichen.

Vorteilhaft ist es weiterhin, wenn bei der Positionsüberwachungsvorrichtung zumindest eine Haltevorrichtung zur Halterung von zumindest Teilen der Positionsüberwachungsvorrichtung, insbesondere zur Halterung von zumindest einer Lichtstrahlpositionserkennungsvorrichtung vorgesehen ist, wobei die zumindest eine Haltevorrichtung bevorzugt umfangsartig, insbesondere ringartig ausgebildet ist. Die Haltevorrichtung kann also beispielsweise zur Aufnahme von einzelnen Messsensoren wie beispielsweise CCD-Chips, Fototransistoren und dergleichen verwendet werden. Dabei ist es auch möglich, dass die Haltevorrichtung zur Aufnahme weiterer Komponenten dient. Üblicherweise ist es jedoch von Vorteil, wenn die Haltevorrichtung lediglich zur Halterung von zumindest Teilen der Positionsüberwachungsvorrichtung dient, allenfalls der zusätzlichen Halterung von einigen wenigen, insbesondere möglichst leichten Komponenten wie weiteren Messsensoren. Die Haltevorrichtung kann insbesondere eine Formgebung aufweisen (beziehungsweise einer Formgebung angenähert sein), die der Formgebung der Gehäusevorrichtung entspricht. Insbesondere bei einer zylindrischen, röhrenartigen Gehäusevorrichtung kann es sich dementsprechend um eine insbesondere ringartig ausgebildete Haltevorrichtung handeln. Insbesondere bei einer umfangsartigen bzw. ringartigen Ausbildung der Haltevorrichtung (und gegebenenfalls einer entsprechend vorteilhaften Anordnung der einzelnen Messsensoren auf der Haltevorrichtung) können auch Verkippungen bzw. Verdrehungen besonders vorteilhaft erfasst werden.

Vorteilhaft kann es weiterhin sein, wenn bei der Positionsüberwachungsvorrichtung die zumindest eine Haltevorrichtung zumindest teilweise und/oder zumindest bereichsweise mit zumindest einer zu überprüfenden Vorrichtung und/oder zumindest teilweise und/oder zumindest bereichsweise mit zumindest einer Gehäuseeinrichtung verbunden ist, insbesondere daran befestigt ist. Bei einer derartigen Ausbildung ist es üblicherweise besonderes gut möglich, durch den "direkten Kontakt" die Position der zu überprüfenden Vorrichtung beziehungsweise den betreffenden Teil der Gehäuseeinrichtung im Wesentlichen unmittelbar zu messen beziehungsweise durch einfache Transformationsvorschriften vom Messwert auf die tatsächliche Position der zu überprüfenden Vorrichtung beziehungsweise dem Teil der Gehäuseeinrichtung zu schließen.

Eine weitere vorteilhafte Ausbildungsform der Positionsüberwachungsvorrichtung kann sich ergeben, wenn eine Mehrzahl an Lichtstrahlpositionserkennungsvorrichtungen (also beispielsweise ein Paar oder eine Vielzahl von Lichtstrahlpositionserkennungsvorrichtungen beziehungsweise eine Vielzahl von derartigen Paaren) vorgesehen ist, die insbesondere entlang eines Umfangsbereichs der zumindest einen Gehäusevorrichtung und/oder der zumindest einen Haltevorrichtung angeordnet sind und bevorzugt winkelartig beabstandet entlang eines Umfangsbereichs der zumindest einen Gehäuseeinrichtung und/oder der zumindest einen Haltevorrichtung angeordnet sind. Durch eine derartige Ausbildung können einerseits unterschiedliche Richtungen vermessen werden (und damit beispielsweise eine (Relativ-) Position des Lichtstrahls in einer x-y-Ebene vermessen werden), es kann aber auch eine gewisse "Redundanz" des Messwerts erzielt werden. Insbesondere kann durch eine derartige "Redundanz" die Ausfallsicherheit der Positionsüberwachungsvorrichtung erhöht werden, beziehungsweise durch Mittelung unterschiedlicher Messwerte die Messgenauigkeit erhöht werden. Möglich ist es auch, Messprinzipien zu verwenden, die üblicherweise nur dann brauchbar funktionieren, wenn eine Mehrzahl an Lichtstrahlpositionserkennungsvorrichtungen vorgesehen ist. Ein Beispiel ist die Messung zweier Lichtintensitäten und die Bildung des Verhältnisses daraus. Entsprechendes kann auch für zusätzliche erwünschte Messwerte gelten, wie beispielsweise hinsichtlich einer Verkippung und/oder einer Verdrehung der zu überwachenden Vorrichtung. Die Verteilung entlang des Umfangsbereichs der zumindest einen Gehäuseeinrichtung beziehungsweise der zumindest einen Haltevorrichtung erfolgt vorzugsweise in äquidistanten Intervallen. Insbesondere können beispielsweise Lichtstrahlpositionserkennungsvorrichtungen (gegebenenfalls auch Lichtstrahlpositionserkennungsvorrichtungspaare) in einem 180°-Raster, in einem 120°-Raster, in einem 90°-Raster, in einem 60°-Raster, in einem 45°-Raster und/oder in einem 30°-Raster vorgesehen werden.

Weiterhin kann es vorteilhaft sein, wenn die Positionsüberwachungsvorrichtung eine relative Verschiebung zwischen zumindest Teilbereichen der zumindest einen Gehäuseeinrichtung und/oder zumindest einer zu überwachenden Vorrichtung und dem zumindest einen Lichtstrahl erkennt, bevorzugt misst. Bei einem derartigen Aufbau kann der insbesondere bei Teilchenstrahlbeschleunigern beziehungsweise bei Teilchenstrahlexperimenten "relevante Messwert" im Wesentlichen direkt und unmittelbar bestimmt werden. Dies ist in aller Regel besonders vorteilhaft.

Weiterhin ist es von Vorteil, wenn bei der Positionsüberwachungsvorrichtung die Messung der Lichtstrahlpositionserkennungsvorrichtungen auf einer Lichtstrahlposition und/oder auf einem Lichtintensitätsverhältnis basiert. Hierdurch sind in der Regel besonders genaue Aussagen auf vergleichsweise einfachem Wege möglich.

Möglich ist es darüber hinaus, wenn bei der Positionsüberwachungsvorrichtung zumindest eine Lichtstreumittel-Einbringungseinrichtung, insbesondere zumindest eine Gas-Einbringungsvorrichtung und/oder zumindest eine Teilchenstrahl-Einbringungsvorrichtung vorgesehen ist. Auf diese Weise kann das Innere des Gehäuses (insbesondere dann, wenn dieses mit einem Vakuum beaufschlagt ist) gezielt "verunreinigt" werden, sodass eine ausreichende Anzahl an Lichtstreukörpern vorhanden ist. Insbesondere ist es denkbar, dass ein Edelgas, wie insbesondere Neon, Argon, Krypton, Xenon und/oder Helium eingebracht wird. Gegebenenfalls kann auch eine Kühlung des einzubringenden Lichtstreumittels vorgesehen werden, beispielsweise um eine Kondensation der Lichtstrahlpositionserkennungsvorrichtung bei Einbringung warmer Gase möglichst weitgehend zu verhindern.

Des Weiteren wird eine Teilchenbeschleunigersegmenteinrichtung beziehungsweise ein Teilchenbeschleuniger und/oder eine Vakuumeinrichtung und/oder eine kryostatische Einrichtung vorgeschlagen, der/die zumindest eine Positionsüberwachungsvorrichtung mit dem vorab beschriebenen Aufbau aufweist. Bei der Vakuumeinrichtung kann sich insbesondere um eine Hochvakuumeinrichtung handeln. Bei der kryostatischen Einrichtung kann es sich insbesondere um eine Einrichtung handeln, die zumindest bereichsweise der Aufnahme kryostatischer Komponenten dient. Die resultierende Teilchenbeschleunigersegmenteinrichtung beziehungsweise der resultierende Teilchenbeschleuniger kann dann die bereits vorab beschriebenen Eigenschaften und Vorteile in analoger Weise aufweisen. Unter einem Teilchenbeschleuniger können grundsätzlich sämtliche Arten von Teilchenbeschleunigern verstanden werden, wie insbesondere zyklisch arbeitende Teilchenbeschleuniger (Zyklotron/Synchrotron) und/oder linear arbeitende Beschleuniger und/oder Kombinationen hieraus. Darüber hinaus kann er im Sinne der vorherigen Beschreibung zumindest sinngemäß weitergebildet werden. Unter einer Teilchenbeschleunigersegmenteinrichtung ist im Übrigen insbesondere ein Abschnitt eines Teilchenbeschleunigers zu verstehen, insbesondere ein solcher Abschnitt, der als separate Einheit gehandelt werden kann beziehungsweise typischerweise gehandelt wird.

Weiterhin wird die Verwendung einer Positionsüberwachungsvorrichtung mit dem vorab beschriebenen Aufbau für eine Teilchenbeschleunigersegmenteinrichtung beziehungsweise einen Teilchenbeschleuniger und/oder eine Vakuumeinrichtung und/oder eine kryostatische Einrichtung vorgeschlagen. Auch hier ergeben sich die bereits beschriebenen Vorteile und Eigenschaften in analoger Weise und/oder Modifikationen im Sinne der vorherigen Beschreibung sind möglich.

Im Folgenden wird die Erfindung anhand vorteilhafter Ausführungsbeispiele und unter Bezugnahme auf die beigefügte Zeichnung näher erläutert. Es zeigen:
- Fig. 1:: Einen Teil einer Teilchenbeschleunigervorrichtung in einer schematischen Draufsicht von oben;
- Fig. 2:: eine schematische Ansicht eines ersten Ausführungsbeispiels einer Positionsmessvorrichtung in schematischer Darstellung;
- Fig. 3:: ein zweites Beispiel einer Positionsmessvorrichtung, die nicht Teil der Erfindung ist, in schematischer Darstellung.

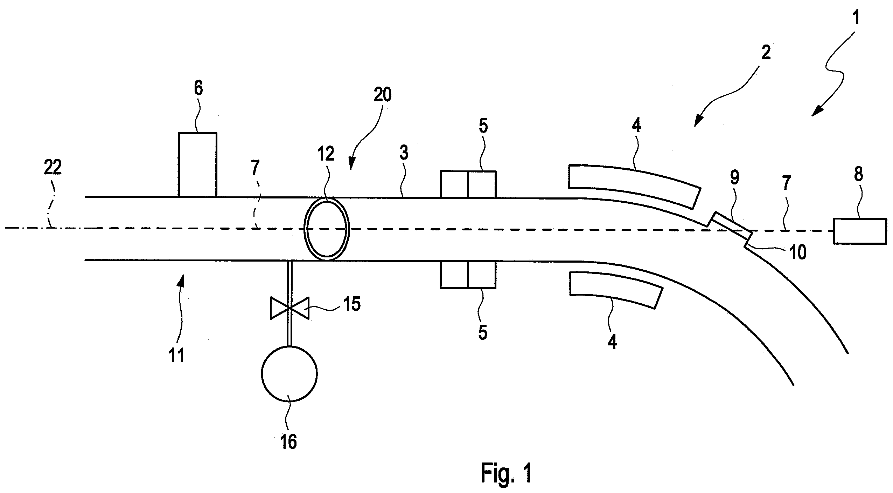

In Figur 1 ist in einer schematischen Draufsicht ein Ausschnitt 2 eines Teilchenbeschleuniger-Synchrotrons 1 dargestellt. Aus Veranschaulichungsgründen sind dabei nur einzelne Komponenten eingezeichnet und diese darüber hinaus nur in vereinfachter, schematischer Darstellung. Dementsprechend wiese ein vollständiges Synchrotron 1 eine größere Anzahl an Komponenten auf und wäre darüber hinaus vollständig zu einem vollständig umlaufenden, in sich geschlossenen Gebilde geformt.

Das Synchrotron 1 besteht aus einem umlaufenden, evakuierten (also mit Vakuum beaufschlagten) umlaufenden Rohr, der so genannten Beam Pipe 3. Bei heutigen Teilchenbeschleunigern liegt das Vakuum üblicherweise im Ultrahochvakuumbereich (UHV) beziehungsweise im Extremhochvakuumbereich (XHV). In der Beam Pipe 3 läuft im Betrieb des Synchrotrons 1 der Teilchenstrahl um, der normalerweise in Form eines beziehungsweise mehrerer so genannter Teilchen-Bunche vorliegt, also einzelner Teilchenpakete mit einer Längserstreckung von üblicherweise mehreren Metern. Der Durchmesser des Teilchenstrahls liegt, wie allgemein üblich, im Bereich von größenordnungsmäßig 1 - 5 mm.

Benachbart zur Beam Pipe 3, beziehungsweise mit der Beam Pipe 3 verbunden oder auch (teilweise) innerhalb der Beam Pipe 3 angeordnet befinden sich unterschiedlichste Hilfsaggregate, von denen in Figur 1 einige schematisch angedeutet sind. So werden zum Beispiel Dipolmagnete 4 dazu verwendet, den Teilchenstrahl zu biegen, um so einen Umlauf der Teilchen bewirken zu können. Weiterhin sind Quadrupolpaare 5 vorgesehen, welche aus zwei unmittelbar hintereinander, senkrecht zueinander verdrehter Quadrupolmagnete aufgebaut sind. Derartige Quadrupolpaare werden üblicherweise auch als "FODO" bezeichnet (FODO für focussing - defocussing device). Weitere Komponenten, die vorliegend nicht dargestellt sind, können auch Beschleunigerstrukturen, Extraktions- und Injektions-Bereiche sowie so genannte Kicker-Magnete und dergleichen sein. Zusätzlich ist in Figur 1 noch eine Turbopumpe 6 schematisch eingezeichnet, die der Evakuierung der Beam Pipe 3 dient. Zusätzlich oder alternativ können selbstverständlich auch noch andere Pumpenvarianten verwendet werden. Insbesondere wird zum Erreichen des XHV-Bereichs üblicherweise auf Getter-Pumpen beziehungsweise Kryo-Pumpen zurückgegriffen.

Da einige der Komponenten im Zusammenhang mit Synchrotrons 1 aus unterschiedlichsten Gründen mit sehr niedrigen Temperaturen beaufschlagt werden, kommt es bei einer Evakuierung und Abkühlung von Teilen des Synchrotrons 1 zu Zwecken der Inbetriebnahme meist unvermeidlich zu einem Verziehen von einzelnen Komponenten beziehungsweise Teilen der Beam Pipe 3. Ein Abkühlen von Komponenten ist beispielsweise erforderlich, um supraleitende Effekte ausnutzen zu können. Dies betrifft insbesondere Magnete wie beispielsweise die Dipolmagnete 4, die Quadrupolmagnete 5 und gegebenenfalls auch die Beschleunigerstrecken (gegebenenfalls auch weitere Magnete). Auch ist ein Abkühlen bei unterschiedlichsten Arten von Messgeräten oftmals sinnvoll, um deren Messgenauigkeit zu erhöhen (insbesondere um so genanntes thermisches Rauschen zu unterdrücken). Bei Kryo-Pumpen wiederum werden die tiefen Temperaturen verwendet, um Gasteilchen zu binden (was dem Funktionsprinzip von Kryo-Pumpen entspricht).

Aufgrund der entstehenden thermischen und mechanischen Belastungen kommt es daher in der Regel zu einem Verziehen der Beam Pipe 3 und damit zu einer Dejustage der gesamten Anordnung. Dies kann dazu führen, dass sich Sensoren, Beschleunigerkomponenten und dergleichen derartig gegeneinander dejustieren, dass es zu Strahlverlusten kommen kann (beziehungsweise bestenfalls ein instabiler Teilchenstrahl bereitgestellt werden kann). Um dies zu vermeiden, müssen die mechanischen Längenänderungen/Dejustagen vermessen werden. Zu diesem Zweck ist bei dem in Figur 1 dargestellten Synchrotron 1 ein erstes Ausführungsbeispiel einer Positionsmessanordnung 20 vorgesehen. Vorliegend wird vorgeschlagen, hierzu einen Laserstrahl 7 (gestrichelte Linie) durch einen außerhalb der Beam Pipe 3 angeordneten Laser 8 zu erzeugen und über ein Sichtfenster 9, welches auf einem Flansch 10 der Beam Pipe 3 befestigt ist, in die Beam Pipe 3 einzustrahlen. Die Lage und Anordnung des Fensters 9 kann dabei selbstverständlich variieren. Möglich ist es im Übrigen auch, dass zur Einkopplung des Laserstrahls 7 eine Glasfaser verwendet wird, oder dass ein Halbleiterlaser (beispielsweise eine Laserdiode) innerhalb der Beam Pipe 3 angeordnet wird.

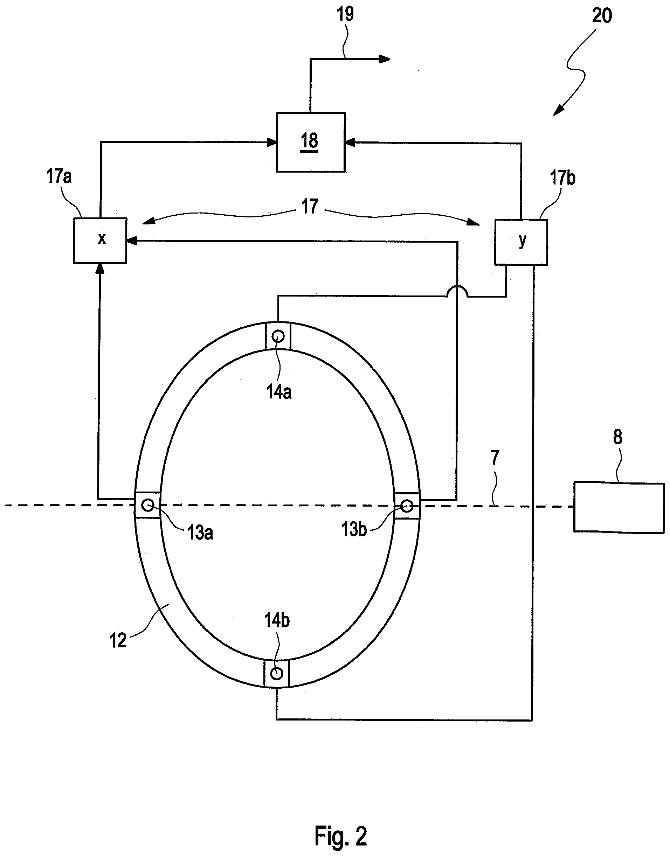

Im vorliegend dargestellten Ausführungsbeispiel von Figur 1 verläuft der Laserstrahl 7 im geradlinigen Bereich 11 der Beam Pipe 3 parallel und mittig zur Zentralachse 22 der Beam Pipe 3. In Figur 1 ist ein Haltering 12 für mehrere Lichtmesssensoren 13a, 13b, 14a, 14b (vergleiche Figur 2) in der Beam Pipe 3 vorgesehen. Die Lichtmesssensoren 13a, 13b, 14a, 14b messen dabei die Intensität des Streulichts des Laserstrahls 7. Da in einer UHV- beziehungsweise XHV-evakuierten Beam Pipe 3 in der Regel nur noch sehr wenige Streuzentren vorhanden sind, kann der Effekt auftreten, dass eine ausreichend genaue Messung nicht mehr (sinnvoll) möglich ist (auch wenn das Innere der Beam Pipe 3 üblicherweise extrem lichtarm ist). Um für eine Messung kurzfristig ausreichend Streuzentren zur Verfügung zu haben, ist es möglich, gezielt über ein Steuerventil 15 Edelgas aus einem Vorratstank 16 in die Beam Pipe 3 zu leiten. Beispielsweise kann es sich bei dem Edelgas um Helium, Argon, Neon, Krypton oder Xenon beziehungsweise ein Gemisch aus diesen Gasen handeln. In aller Regel ist ein sehr geringer Druck ausreichend, sodass beispielsweise ein XHV-Vakuum lediglich lokal zu einem beispielsweise UHV-Vakuum verunreinigt wird. Möglich ist es auch, dass die Verunreinigung lediglich zeitlich begrenzt und/oder intervallartig erfolgt.

In Figur 2 ist die Messanordnung mit dem Haltering 12 sowie den darauf angeordneten Lichtmesssensoren 13a, 13b, 14a, 14b näher dargestellt. Die Lichtmesssensoren 13a, 13b, 14a, 14b sind dabei jeweils paarweise angeordnet. Ein erstes Paar an Lichtmesssensoren 13a, 13b ist in der horizontalen Ebene angeordnet. Dementsprechend kann mit diesem Lichtmesssensorpaar 13a, 13b die x-Koordinate des Laserstrahls 7 gemessen werden. Ein zweites Lichtmesssensorpaar 14a, 14b ist vertikal zueinander angeordnet. Dementsprechend kann mit diesem Lichtmesssensorpaar 14a, 14b die y-Koordinate des Laserstrahls 7 vermessen werden.

Die jeweiligen Lichtmesssensorpaare 13a, 13b beziehungsweise 14a, 14b messen jeweils die empfangene Lichtintensität an der jeweiligen Position und leiten diese an eine Lichtstärkeverhältnisbestimmungsschaltung 17a, 17b. Die von den Lichtstärkeverhältnisbestimmungsschaltungen 17 bestimmten Verhältnisse werden im vorliegend dargestellten Ausführungsbeispiel an einen elektronischen Einplatinenrechner 18 geleitet, der die ermittelten Verhältnisse beispielsweise in ein Digitalsignal wandelt und mithilfe eines Netzwerkprotokolls über ein Datenkabel 19 ausgibt. Ist das Lichtstärkeverhältnis einer der Lichtstärkeverhältnisbestimmungsschaltungen 17a, 17b gleich 1, so ist der Laserstrahl 7 in der jeweiligen Richtung (x- beziehungsweise y-Richtung) mittig liegend. Ist das Verhältnis dagegen größer beziehungsweise kleiner 1, so ist die relative Lage des Laserstrahls 7 gegenüber den ihn umgebenden Komponenten verschoben. Je nach Größe des Verhältnisses kann auf die Größe der Verschiebung geschlossen werden.

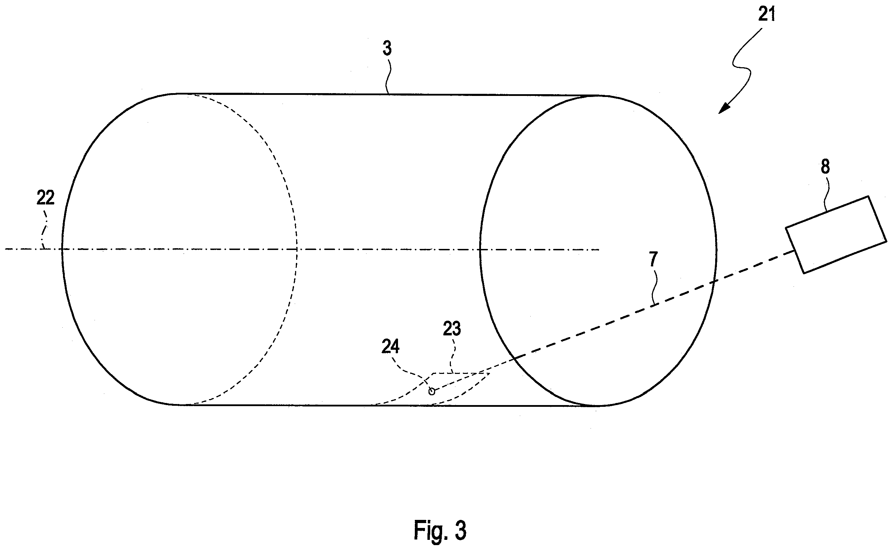

In Figur 3 ist schließlich noch ein weiteres mögliches Beispiel für eine Positionsmessanordnung 21 dargestellt. Hier wird der vom Laser 8 erzeugte Laserstrahl 7 schräg zur zentralen Achse 22 der Beam Pipe 3 eingestrahlt. Beim Aufbau der Positionsmessanordnung 21 ist dabei auf Reflektions-, Brechungs- und Transmissionseffekte Rücksicht zu nehmen. Seitlich an der Wand der Beam Pipe 3 ist im vorliegend dargestellten Ausführungsbeispiel ein CCD-Chip 23 montiert. Kommt es zu einer Verschiebung des entsprechenden Bereichs der Beam Pipe, so bewegt sich der CCD-Chip 23 zusammen mit der Beam Pipe 3 mit. Dementsprechend kommt es zu einer dazu korrespondierenden Verschiebung des Auftreffpunkts 24 des Laserstrahls 7 auf dem CCD-Chip 23. Dieses Signal kann gemessen und geeignet ausgewertet werden. Dementsprechend ist auch auf diese Weise eine Positionsbestimmung des betreffenden Bereichs der Beam Pipe 3 möglich.

Es ist selbstverständlich auch möglich, dass der Haltering 12 beziehungsweise die Messsensoren 13a, 13b, 14a, 14b, 23 auf einer Vorrichtung angeordnet wird/werden, deren Position zu messen ist.

### Bezugszeichenliste:

- 1.: Synchrotron
- 2.: Ausschnitt
- 3.: Beam Pipe
- 4.: Dipolmagnet
- 5.: Quadrupolpaare
- 6.: Kryo-Pumpe
- 7.: Laserstrahl
- 8.: Laser
- 9.: Sichtfenster
- 10.: Flansch
- 11.: geradliniger Bereich
- 12.: Halterung
- 13.(13a, 13b): horizontaler Lichtmesssensor
- 14.(14a, 14b): vertikaler Lichtmesssensor
- 15.: Steuerventil
- 16.: Vorratstank
- 17.: Lichtstärkeverhältnisbestimmungsschaltung
- 18.: elektronischer Einplatinenrechner
- 19.: Datenkabel
- 20.: Positionsmessanordnung
- 21.: Positionsmessanordnung
- 22.: zentrale Achse
- 23.: CCD-Chip
- 24.: Auftreffpunkt

## Patentansprüche

1. Teilchenbeschleunigersegmenteinrichtung (2) aufweisend zumindest eine Gehäuseeinrichtung (3), die als Vakuumeinrichtung ausgebildet ist, sowie zumindest eine Positionsüberwachungsvorrichtung (20, 21) zur Uberwachung der Position von zumindest einer zu überwachenden Vorrichtung, wobei die zu überwachende Vorrichtung in der Gehäuseeinrichtung (3) angeordnet ist, die Positionsüberwachungsvorrichtung (20, 21) aufweisend mindestens eine strahlartige Lichtquellenvorrichtung (8) sowie zumindest eine Lichtstrahlpositionserkennungsvorrichtung (13a, 13b, 14a, 14b, 23),
**dadurch gekennzeichnet, dass** die zumindest eine Lichtstrahlpositionserkennungsvorrichtung (13a, 13b, 14a, 14b, 23) als Streulichterkennungsvorrichtung (13a, 13b, 14a, 14b) ausgebildet ist, wobei die Streulichterkennungsvorrichtung als Paar zweier Sensoren ausgebildet ist, die Streulicht messen.

2. Teilchenbeschleunigersegmenteinrichtung (2) nach Anspruch 1, **dadurch gekennzeichnet, dass** die zumindest eine strahlartige Lichtquellenvorrichtung (8) als Laservorrichtung (8) ausgebildet ist.

3. Teilchenbeschleunigersegmenteinrichtung (2) nach Anspruch 1 oder 2, **dadurch gekennzeichnet, dass** der Lichtstrahl (7) der strahlartigen Lichtquellenvorrichtung (8) im Wesentlichen parallel und/oder unter einem definierten Winkel zur Längsachse (22) der zumindest einen Gehäuseeinrichtung (3) verläuft.

4. Teilchenbeschleunigersegmenteinrichtung (2) nach einem der vorangehenden Ansprüche, **dadurch gekennzeichnet, dass** die zumindest eine Gehäuseeinrichtung (3) als Hochvakuumeinrichtung ausgebildet ist und/oder zumindest bereichsweise als kryostatische Einrichtung ausgebildet ist und/oder zumindest teilweise zur Aufnahme kryostatischer Komponenten dient.

5. Teilchenbeschleunigersegmenteinrichtung (2) nach einem der vorangehenden Ansprüche, wobei die zumindest eine Gehäuseeinrichtung (3) zumindest eine verbindungsflanschartige Öffnung, zumindest eine Fenstervorrichtung (9) und/oder zumindest eine Glasfaserdurchführungsvorrichtung aufweist.

6. Teilchenbeschleunigersegmenteinrichtung (2) nach einem der vorangehenden Ansprüche, **dadurch gekennzeichnet, dass** zumindest eine zusätzliche Lichtstrahlpositionserkennungsvorrichtung (13a, 13b, 14a, 14b, 23) als direktbestrahlte Lichtstrahlerkennungsvorrichtung (23) ausgebildet ist.

7. Teilchenbeschleunigersegmenteinrichtung (2) nach einem der vorangehenden Ansprüche, **dadurch gekennzeichnet, dass** die zumindest eine als Streulichterkennungsvorrichtung (13a, 13b, 14a, 14b) ausgebildete Lichtstrahlpositionserkennungsvorrichtung (13a, 13b, 14a, 14b, 23)als Streulichtpositionserkennungsvorrichtungspaar (13, 14) und/oder als Streulichtintensitätserkennungsvorrichtungspaar (13, 14) ausgebildet ist.

8. Teilchenbeschleunigersegmenteinrichtung (2) nach einem der vorangehenden Ansprüche, **gekennzeichnet durch** zumindest eine Haltevorrichtung (12) zur Halterung der zumindest einen Lichtstrahlpositionserkennungsvorrichtung (13a, 13b, 14a, 14b), wobei die zumindest eine Haltevorrichtung (12) bevorzugt umfangsartig, insbesondere ringartig, ausgebildet ist.

9. Teilchenbeschleunigersegmenteinrichtung (2) nach Anspruch 8, **dadurch gekennzeichnet, dass** die zumindest eine Haltevorrichtung (12) mit der zumindest einen zu überprüfenden Vorrichtung und/oder mit der Gehäuseeinrichtung (3) verbunden ist.

10. Teilchenbeschleunigersegmenteinrichtung (2) nach einem der vorangehenden Ansprüche, **gekennzeichnet durch** eine Mehrzahl an Lichtstrahlpositionserkennungsvorrichtungen (13a, 13b, 14a, 14b, 23), welche winkelartig beabstandet entlang eines Umfangsbereichs der zumindest einen Gehäuseeinrichtung (3) und/oder der zumindest einen Haltevorrichtung (12) angeordnet sind .

11. Teilchenbeschleunigersegmenteinrichtung (2) nach einem der vorangehenden Ansprüche, **dadurch gekennzeichnet, dass** die Positionsüberwachungsvorrichtung (20, 21) eine relative Verschiebung zwischen zumindest Teilbereichen der zumindest einen Gehäuseeinrichtung (3) und/oder zumindest einer zu überwachenden Vorrichtung und dem zumindest einen Lichtstrahl (7) misst.

12. Teilchenbeschleunigersegmenteinrichtung (2) nach einem der vorangehenden Ansprüche, **dadurch gekennzeichnet, dass** die Messung der Lichtstrahlpositionserkennungsvorrichtungen (13a, 13b, 14a, 14b, 23) auf einem Lichtintensitätsverhältnis basiert.

13. Teilchenbeschleunigersegmenteinrichtung (2) nach einem der vorangehenden Ansprüche, **gekennzeichnet durch** zumindest eine Lichtstreumittel-Einbringungseinrichtung (15, 16) und/oder durch zumindest eine Teilchenstrahl-Einbringungsvorrichtung.

14. Teilchenbeschleuniger (1), aufweisend zumindest eine Teilchenbeschleunigersegmenteinrichtung (2) nach einem der Ansprüche 1 bis 13.

15. Verfahren zur Bestimmung der Position einer zu überwachenden Vorrichtung, die in zumindest einer Gehäuseeinrichtung (3) angeordnet ist, wobei die Gehäuseeinrichtung als Teil eines Teilchenbeschleunigerssegmenteinrichtung (2) und als Vakuumeinrichtung ausgebildet ist, wobei ein Lichtstrahl (7) einer strahlartigen Lichtquelle (8) parallel oder in einem definierten Winkel zur Längsachse der Gehäuseeinrichtung in die Gehäuseeinrichtung eingestrahlt wird und mittels zumindest einer Lichtstrahlpositionserkennungsvorrichtung (13a, 13b, 14a, 14b), die als Paar zweier Sensoren ausgebildet ist, Streulicht der strahlartigen Lichtquelle (8) gemessen und eine relative Verschiebung zwischen Teilbereichen der Beschleunigereinrichtung und/oder der zumindest einen zu überwachenden Vorrichtung und dem zumindest einen Lichtstrahl (7) gemessen wird.

## Claims

1. Particle accelerator segment apparatus (2) comprising at least one housing apparatus (3) in the form of a vacuum apparatus and at least one position monitoring device (20, 21) for monitoring the position of at least one device to be monitored, the device to be monitored being arranged in the housing apparatus (3), the position monitoring device (20, 21) comprising at least one beam-type light source device (8) and at least one light beam position detection device (13a, 13b, 14a, 14b, 23),
**characterised in that** the at least one light beam position detection device (13a, 13b, 14a, 14b, 23) takes the form of a scattered light detection device (13a, 13b, 14a, 14b), wherein the scattered light detection device takes the form of a pair of two sensors which measure scattered light.

2. Particle accelerator segment apparatus (2) according to claim 1, **characterised in that** the at least one beam-type light source device (8) takes the form of a laser apparatus (8).

3. Particle accelerator segment apparatus (2) according to claim 1 or 2, **characterised in that** the light beam (7) of the beam-type light source device (8) extends substantially parallel and/or at a defined angle to the longitudinal axis (22) of the at least one housing apparatus (3).

4. Particle accelerator segment apparatus (2) according to one of the preceding claims, **characterised in that** the at least one housing apparatus (3) takes the form of a high vacuum apparatus and/or at least in places takes the form of a cryostatic apparatus and/or at least in part serves to accommodate cryostatic components.

5. Particle accelerator segment apparatus (2) according to one of the preceding claims, wherein the at least one housing apparatus (3) has at least one connecting flange-type opening, at least one window device (9) and/or at least one glass fibre leadthrough device.

6. Particle accelerator segment apparatus (2) according to one of the preceding claims, **characterised in that** at least one additional light beam position detection device (13a, 13b, 14a, 14b, 23) takes the form of a directly illuminated light beam detection device (23).

7. Particle accelerator segment apparatus (2) according to one of the preceding claims, **characterised in that** the at least one light beam position detection device (13a, 13b, 14a, 14b, 23) in the form of a scattered light detection device (13a, 13b, 14a, 14b) takes the form of a scattered light position detection device pair (13, 14) and/or of a scattered light intensity detection device pair (13, 14).

8. Particle accelerator segment apparatus (2) according to one of the preceding claims, **characterised by** at least one holding device (12) for holding the at least one light beam position detection device (13a, 13b, 14a, 14b), wherein the at least one holding device (12) is preferably of circumferential, in particular annular, construction.

9. Particle accelerator segment apparatus (2) according to claim 8, **characterised in that** the at least one holding device (12) is connected to the at least one device to be checked and/or to the housing apparatus (3).

10. Particle accelerator segment apparatus (2) according to one of the preceding claims, **characterised by** a plurality of light beam position detection devices (13a, 13b, 14a, 14b, 23) which are arranged spacedly at an angle along a circumferential region of the at least one housing apparatus (3) and/or of the at least one holding device (12).

11. Particle accelerator segment apparatus (2) according to one of the preceding claims, **characterised in that** the position monitoring device (20, 21) measures a relative displacement between at least subregions of the at least one housing apparatus (3) and/or at least one device to be monitored and the at least one light beam (7).

12. Particle accelerator segment apparatus (2) according to one of the preceding claims, **characterised in that** the measurement of the light beam position detection devices (13a, 13b, 14a, 14b, 23) is based on a light intensity ratio.

13. Particle accelerator segment apparatus (2) according to one of the preceding claims, **characterised by** at least one light-scattering agent introduction apparatus (15, 16) and/or by at least one particle beam introduction device.

14. Particle accelerator (1) comprising at least one particle accelerator segment apparatus (2) according to one of claims 1 to 13.

15. Method for determining the position of a device to be monitored which is arranged in at least one housing apparatus (3), wherein the housing apparatus takes the form of part of a particle accelerator segment apparatus (2) and a vacuum apparatus, wherein a light beam (7) from a beam-type light source (8) is irradiated into housing apparatus parallel or at a defined angle to the longitudinal axis of the housing apparatus and, by means of at least one light beam position detection device (13a, 13b, 14a, 14b), which is in the form of a pair of two sensors, measures scattered light from the beam-type light source (8) and a relative displacement between subregions of the accelerator apparatus and/or of the at least one device to be monitored and the at least one light beam (7) is measured.

## Revendications

1. Segment d'accélérateur de particules (2) présentant au moins un dispositif de logement (3) conçu sous forme de dispositif à vide, ainsi qu'au moins un dispositif de surveillance de position (20, 21) pour surveiller la position d'au moins un équipement à surveiller, sachant que l'équipement à surveiller est disposé dans le dispositif de logement (3), le dispositif de surveillance de position (20, 21) présentant au moins un dispositif de source lumineuse en forme de rayon (8) ainsi qu'au moins un dispositif de détection de la position du rayon lumineux (13a, 13b, 14a, 14b, 23),
**caractérisé en ce que** ledit au moins un dispositif de détection de la position du rayon lumineux (13a, 13b, 14a, 14b, 23) est conçu sous forme de dispositif de détection de la lumière diffusée (13a, 13b, 14a, 14b), sachant que le dispositif de détection de la lumière diffusée est conçu sous forme de paire de deux capteurs qui mesurent la lumière diffusée.

2. Segment d'accélérateur de particules (2) selon la revendication 1, **caractérisé en ce que** ledit au moins un dispositif de source lumineuse en forme de rayon (8) est conçu sous forme de dispositif à laser (8).

3. Segment d'accélérateur de particules (2) selon la revendication 1 ou 2, **caractérisé en ce que** le rayon lumineux (7) du dispositif de source lumineuse en forme de rayon (8) s'étend essentiellement parallèlement à l'axe longitudinal (22) dudit au moins un dispositif de logement (3) et/ou selon un angle défini par rapport audit axe longitudinal.

4. Segment d'accélérateur de particules (2) selon une des revendications précédentes, **caractérisé en ce que** ledit au moins un dispositif de logement (3) est conçu sous forme de dispositif à vide poussé et/ou conçu au moins partiellement sous forme de dispositif cryostatique et/ou sert au moins partiellement à loger des composants cryostatiques.

5. Segment d'accélérateur de particules (2) selon une des revendications précédentes, **caractérisé en ce que** ledit au moins un dispositif de logement (3) présente au moins une ouverture de type bride de jonction, au moins un dispositif à fenêtre (9) et/ou au moins un dispositif de passage de fibres optiques.

6. Segment d'accélérateur de particules (2) selon une des revendications précédentes, **caractérisé en ce qu'**au moins un dispositif de détection de la position du rayon lumineux (13a, 13b, 14a, 14b, 23) supplémentaire est conçu sous forme de dispositif de détection du rayon lumineux directement irradié (23).

7. Segment d'accélérateur de particules (2) selon une des revendications précédentes, **caractérisé en ce que** ledit au moins un dispositif de détection de la position du rayon lumineux (13a, 13b, 14a, 14b, 23) conçu sous forme de dispositif de détection de la lumière diffusée (13a, 13b, 14a, 14b) est conçu sous forme de paire de dispositifs de détection de la lumière diffusée (13, 14) et/ou sous forme de paire de dispositifs de détection de l'intensité de la lumière diffusée (13, 14).

8. Segment d'accélérateur de particules (2) selon une des revendications précédentes, **caractérisé en ce que** ledit au moins un dispositif de support (12) sert de support audit au moins un dispositif de détection de la position du rayon lumineux (13a, 13b, 14a, 14b), sachant que ledit au moins un dispositif de support (12) est conçu de préférence sous une forme circonférentielle, notamment sous une forme annulaire.

9. Segment d'accélérateur de particules (2) selon la revendication 8, **caractérisé en ce que** ledit au moins un dispositif de support (12) est relié audit au moins un équipement à contrôler et/ou au dispositif de logement (3).

10. Segment d'accélérateur de particules (2) selon une des revendications précédentes, caractérisé en une pluralité de dispositifs de détection de la position du rayon lumineux (13a, 13b, 14a, 14b, 23) qui sont disposés éloignés les uns des autres de manière angulaire, le long d'une zone circonférentielle dudit au moins un dispositif de logement (3) et/ou dudit au moins un dispositif de support (12).

11. Segment d'accélérateur de particules (2) selon une des revendications précédentes, **caractérisé en ce que** le dispositif de surveillance de la position (20, 21) mesure un décalage relatif entre au moins des zones partielles dudit au moins un dispositif de logement (3) et/ou au moins un équipement à surveiller et ledit au moins un rayon lumineux (7).

12. Segment d'accélérateur de particules (2) selon une des revendications précédentes, **caractérisé en ce que** la mesure des dispositifs de détection de la position du rayon lumineux (13a, 13b, 14a, 14b, 23) est basée sur un rapport d'intensité lumineuse.

13. Segment d'accélérateur de particules (2) selon une des revendications précédentes, caractérisé en au moins un dispositif d'introduction d'un moyen de diffusion de lumière (15, 16) et/ou en au moins un dispositif d'introduction d'un faisceau de particules.

14. Accélérateur de particules (1), présentant au moins un segment d'accélérateur de particules (2) selon une des revendications 1 à 13.

15. Procédé pour déterminer la position d'un équipement à surveiller qui est disposé dans au moins un dispositif de logement (3), sachant que le dispositif de logement est conçu sous forme de partie d'un segment d'accélérateur de particules (2) et sous forme de dispositif à vide, sachant qu'un rayon lumineux (7) d'une source lumineuse en forme de rayon (8) est projeté dans le dispositif de logement, parallèlement ou selon un angle défini par rapport à l'axe longitudinal du dispositif de logement, et qu'au moyen d'au moins un dispositif de détection de la position du rayon lumineux (13a, 13b, 14a, 14b), qui est conçu sous forme de paire de deux capteurs, est mesurée la lumière diffusée de la source lumineuse sous forme de rayon (8) et qu'est mesuré un décalage relatif entre des zones partielles de l'accélérateur et/ou ledit au moins un équipement à surveiller et ledit au moins un rayon lumineux (7).
